(19) Europäisches Patentamt
European Patent Office
Office européen des brevets

(11) **EP 3 605 267 B1**

(12) **FASCICULE DE BREVET EUROPEEN**

(45) Date de publication et mention
de la délivrance du brevet:
**04.01.2023 Bulletin 2023/01**

(21) Numéro de dépôt: **19181053.0**

(22) Date de dépôt: **18.06.2019**

(51) Classification Internationale des Brevets (IPC):
**G05G 1/30** *(2008.04)*     **B60T 7/04** *(2006.01)*

(52) Classification Coopérative des Brevets (CPC):
**G05G 1/30; B60T 7/042**

(54) **PEDALE DE VEHICULE AUTOMOBILE MUNIE D'UN CAPTEUR CAPACITIF DE DETECTION DE PRESENCE**

KRAFTFAHRZEUGPEDAL, DAS MIT EINEM KAPAZITIVEN SENSOR FÜR DIE PRÄSENZERFASSUNG AUSGESTATTET IST

PEDAL FOR MOTOR VEHICLE PROVIDED WITH A CAPACITIVE SENSOR FOR PRESENCE DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **30.07.2018 FR 1857062**

(43) Date de publication de la demande:
**05.02.2020 Bulletin 2020/06**

(73) Titulaire: **PSA Automobiles SA**
**78300 Poissy (FR)**

(72) Inventeurs:
• **MEGY, Arthur**
**92130 Issy les Moulineaux (FR)**
• **BRELET, Tom**
**78140 Vélizy-Villacoublay (FR)**
• **LECOMTE-FOUSSET, Bastien**
**78340 Les Clayes sous Bois (FR)**

(56) Documents cités:
**WO-A1-2018/002714      DE-A1-102010 063 075**
**FR-A1- 2 835 221      GB-A- 2 556 658**
**US-A1- 2011 282 545**

**Description**

La présente invention porte sur une pédale de véhicule automobile munie d'un capteur capacitif de détection de présence. L'invention trouve une application particulièrement avantageuse avec la pédale de freinage du véhicule mais pourrait en variante également être mise en oeuvre avec un autre type de pédale, notamment la pédale d'accélérateur.

De façon connue en soi, avec les capteurs présents classiquement dans les véhicules actuels (contacteur de frein, et capteur de déplacement de pédale pour les systèmes avec freinage autonome), il n'est pas possible de détecter l'appui sur la pédale avant que la pédale de frein ne soit un minimum enfoncée (et donc qu'une pression de freinage soit appliquée, ce qui est intrusif pour le comportement du véhicule).

D'autre part, dans certains systèmes de freinage, l'amplificateur au vide est remplacé par un moteur électrique. Ce dernier permet de remplir la fonction d'assistance au freinage, mais est également capable de freiner de manière autonome. Dans ce deuxième cas, la rotation du moteur permettant d'appliquer la pression de freinage nécessaire entraîne également la pédale, qui se déplace alors.

En outre, les capteurs présents classiquement dans les véhicules (contacteur de frein, et capteur de déplacement de pédale pour les systèmes avec freinage autonome) ne permettent pas de discerner si la pédale se déplace parce que le conducteur appui dessus, ou parce que le système de freinage l'entraîne. Or, le fait de pouvoir discerner ces deux causes est très utile pour pouvoir par exemple rendre le contrôle au conducteur si un appui sur la pédale (et non un mouvement dû au système lui-même) est détecté.

Par ailleurs, en enregistrant cette information, cela peut servir en cas d'accident à savoir si l'action (ou l'absence d'action) de freinage était dû à l'homme ou à la machine.

On connaît également des capteurs d'effort ou capteur FSR (pour "Force Sensitive Resistor" en anglais) permettant de détecter un appui sur la pédale venant du conducteur. Le document US 2011/282545 A1 divulgue ainsi une pédale selon le préambule de la revendication 1.

Cependant, ce type de capteur est très sensible au bruit, et en cas de variations rapides de la position de la pédale de frein, le capteur peut détecter un effort, qui serait alors un faux positif remonté vers l'unité de contrôle.

L'invention vise à remédier efficacement à ces inconvénients en proposant une pédale pour véhicule automobile comportant:

- un patin sur lequel est destiné à appuyer un pied d'un conducteur,

où le patin comporte un capteur capacitif de détection de présence du pied du conducteur, où le capteur capacitif comporte une première plaque conductrice reliée à une unité de traitement, un condensateur étant formé par ladite première plaque conductrice et une deuxième plaque constituée par le pied du conducteur, ladite pédale comportant aussi une résistance de forte valeur disposée entre une unité de traitement et la première plaque conductrice de façon à former un circuit de type RC, la première plaque conductrice du capteur capacitif est excitée par un signal de façon à charger et à décharger le condensateur formé par la première plaque conductrice et le pied du conducteur, pour obtenir un signal de tension aux bornes du condensateur dont l'allure dépend d'une constante de temps du circuit RC, l'unité de traitement étant apte à traiter ce signal de tension pour en déduire une présence ou non du pied du conducteur à proximité ou sur le patin de la pédale, où une entrée/sortie de l'unité de traitement est utilisée pour effectuer une double fonction d'émission du signal d'excitation et de mesure et où une hystérèse de portes logiques de l'unité de traitement est utilisée pour détecter un seuil de tension correspondant à la présence du pied du conducteur.

L'invention permet ainsi de détecter la présence du pied du conducteur sur la pédale, même si ce dernier a simplement posé son pied dessus sans appliquer de pression. Cette information permet d'anticiper un freinage d'urgence (en pré-positionnant les actionneurs) avant même que la pédale ne soit enfoncée. On obtient ainsi une grande réactivité du système lors d'un freinage d'urgence.

L'invention permet aussi de connaître l'état du conducteur (pied sur la pédale ou non) sans que ce dernier ne soit réellement en train de freiner. Cet état reflète le degré de confiance du conducteur envers le système de freinage autonome, son attention, ses habitudes etc... Ces informations peuvent être précieuses lors de l'analyse du ressenti du conducteur envers un nouveau système, ce qui est de plus en plus courant avec l'essor des procédés aides à la conduite.

L'invention permet également de faire la distinction entre une action du conducteur et un déplacement autonome du pédalier. L'invention permet également d'éviter les fausses détections pouvant être retournées par les capteurs d'effort. L'invention pourra également aisément être intégrée dans les patins de pédalier, dans la mesure où elle ne nécessite que la réalisation d'une connexion électrique, et l'ajout de quelques composants électroniques dédiés à la fonction.

Selon une réalisation, le capteur capacitif comporte une première plaque conductrice reliée à une unité de traitement, un condensateur étant formé par la première plaque conductrice et une deuxième plaque constituée par le pied du conducteur.

Selon une réalisation, la pédale comporte une résistance de forte valeur disposée entre une unité de traitement et la première plaque conductrice de façon à former un circuit de type RC.

Selon une réalisation, la première plaque conductrice du capteur capacitif est excitée par un signal de façon à charger et à décharger le condensateur formé par la première plaque conductrice et le pied du conducteur, pour obtenir un signal de tension aux bornes du condensateur dont l'allure dépend d'une constante de temps du circuit RC, l'unité de traitement étant apte à traiter ce signal de tension pour en déduire une présence ou non du pied du conducteur à proximité ou sur le patin de la pédale.

Selon une réalisation, la première plaque conductrice du patin de la pédale est excitée par un signal à modulation de largeur d'impulsion.

Selon l'invention, une entrée/sortie de l'unité de traitement est utilisée pour effectuer une double fonction d'émission du signal d'excitation et de mesure et une hystérèse de portes logiques de l'unité de traitement est utilisée pour détecter un seuil de tension correspondant à la présence du pied du conducteur.

Selon une réalisation, une calibration est effectuée à chaque nouveau démarrage du véhicule automobile.

Selon une réalisation, la calibration est passive en mesurant des valeurs de tension renvoyées lors de premiers appuis sur la pédale.

Selon une réalisation, la pédale est une pédale de freinage.

L'invention a également pour objet un véhicule automobile caractérisé en ce qu'il comporte une pédale de freinage telle que précédemment définie.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'une pédale de véhicule automobile selon l'invention munie d'un capteur capacitif de détection de présence;

La figure 2 est une vue du dessus d'un patin en métal d'une pédale de véhicule automobile selon l'invention intégrant des éléments en caoutchouc pour l'adhérence;

La figure 3 est une représentation graphique du signal d'excitation à modulation de largeur d'impulsion et du signal correspondant observable aux bornes du capteur capacitif de détection de présence respectivement lorsqu'un pied n'est pas à proximité de la pédale et lorsqu'un pied est à proximité de la pédale.

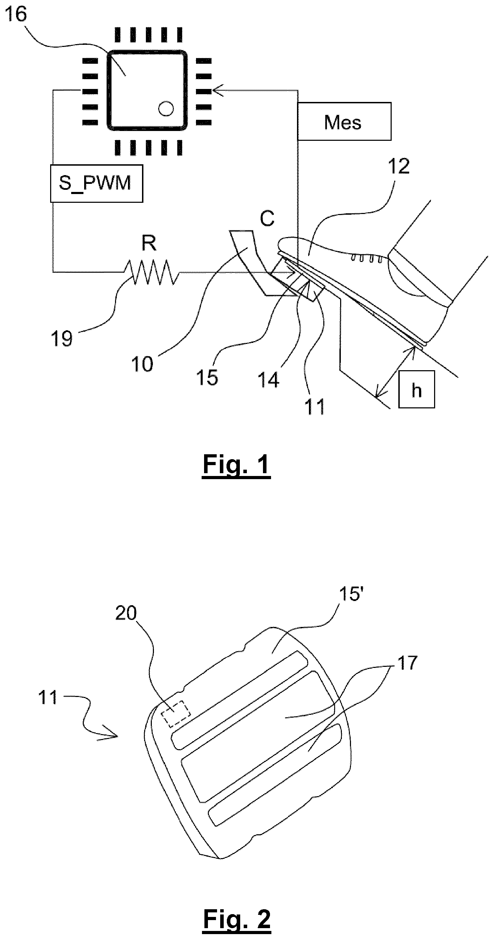

La figure 1 montre une pédale 10 de véhicule automobile, notamment une pédale de freinage, comportant un patin 11 sur lequel est destiné à appuyer un pied 12 d'un conducteur.

Le patin 11 comporte un capteur capacitif de détection de présence 14 du pied 12 du conducteur. Le capteur capacitif de détection de présence 14 comporte une plaque conductrice 15 disposée sur ou à l'intérieur du patin 11 en étant par exemple surmoulée, et reliée à une unité de traitement du signal 16.

Certains types de pédales 10 montrées sur la figure 2 comportent un patin 11 formé par une plaque 15' réalisée dans un matériau métallique, notamment en aluminium. Des éléments en caoutchouc 17 sous forme de bandes sont intégrés dans la plaque 15' pour assurer l'adhérence du pied 12 du conducteur. Dans ce cas, la plaque 15' du patin 11 constitue la plaque conductrice 15 du capteur capacitif 14. Il n'y a donc pas besoin d'ajouter une plaque conductrice supplémentaire sur le patin 11, alors que cela serait nécessaire si le patin 11 était intégralement réalisé en caoutchouc.

La connexion électrique entre le patin 11 et l'unité de traitement du signal 16 est effectuée par exemple au moyen d'un morceau de scotch 20 en cuivre qui pourra par exemple être collé derrière le patin 11. Cela permet de faciliter l'opération de soudure du fil issu de l'unité 16 sur le patin 11. Un coincement du fil entre une bande de caoutchouc 17 et le patin 11 pourrait éventuellement être envisagé mais la qualité du contact serait moins bonne. Alternativement, le fil pourra être directement collé ou soudé sur le patin 11 en aluminium. En variante, la plaque conductrice 15 est réalisée dans un autre matériau conducteur, notamment en cuivre.

Un condensateur est formé par la plaque conductrice 15 et une deuxième plaque constituée par le pied 12 du conducteur, ou le cas échéant une plaque métallique présente par exemple dans une chaussure de sécurité.

La plaque 15 du patin 11 est excitée par un signal à modulation de largeur d'impulsion S_PWM (ou signal PWM pour "Pulse Width Modulation" en anglais) ayant un rapport cyclique de 50%, c'est-à-dire que son potentiel électrique se situe la moitié du temps à 0V, l'autre moitié du temps à 5V (ou autre, tout dépend de la tension logique à laquelle le microcontrôleur fonctionne).

La plaque 15 pourra être reliée à une sortie de l'unité de traitement 16 qui applique le signal d'excitation S_PWM ainsi qu'à une entrée de l'unité de traitement 16 recevant la mesure du signal Mes aux bornes du condensateur. En variante, la plaque 15 est reliée à une entrée/sortie assurant l'excitation ainsi que la mesure du signal Mes aux bornes du condensateur. Dans ce cas, la fréquence des signaux utilisés est plus grande que dans le cas de l'utilisation d'une entrée et d'une sortie distinctes. Une résistance 19 de forte valeur, de l'ordre du méga Ohm, est montée électriquement entre l'unité de traitement 16 et la plaque 15.

Le principe de mesure est le suivant : la plaque 15 du patin 11 et le pied 12 du conducteur sont en vis-à-vis espacés d'une épaisseur h. Ces deux plaques 15, 12 forment donc un condensateur dont la valeur va dépendre de la surface en vis-à-vis mais également de l'espacement entre ces deux plaques 15, 12 comme le montre l'équation d'un condensateur formé par deux plaques conductrices parallèles :

$$C=\varepsilon_0\varepsilon_r \times A/h$$

Avec :

C étant une valeur de la capacité du condensateur;
$\varepsilon_0$ étant une constante diélectrique du vide;
$\varepsilon_r$ étant une constante diélectrique du matériau présent entre les deux plaques;
A étant une aire en vis-à-vis des deux plaques;
h étant un espacement entre les deux plaques.

Il est donc plus précis de faire une mesure où l'on fait varier l'aire car la capacité C mesurée y est proportionnelle, alors qu'en mesurant un espacement, la loi est de type $K \times 1/x$, ce qui explique que la précision du capteur décroit avec la distance h de détection.

La mesure de la variation de la capacité C du condensateur formé par ces deux plaques (la plaque 15 et le pied 12) peut être effectuée car l'ensemble condensateur et résistance forme un circuit RC dont l'évolution de la tension de charge en fonction du temps U(t) est donnée par la relation suivante: $U(t)=E(1-e^{-t/RC})$

- E étant la valeur de la tension du signal à modulation de largeur d'impulsion S_PWM,
- R étant la valeur de la résistance 19, et
- C étant la capacité du condensateur.

En appliquant le signal à modulation de largeur d'impulsion S_PWM sur la plaque 15, on charge puis on décharge le condensateur formé par la plaque 15 et le pied 12 du conducteur, de façon à obtenir un signal de tension aux bornes du condensateur dont l'allure dépend d'une constante de temps du circuit RC. L'unité de traitement 16 est apte à traiter ce signal de tension pour en déduire une présence ou non du pied 12 du conducteur à proximité ou sur le patin 11 de la pédale 10, notamment à partir du couple tension/temps de montée tm.

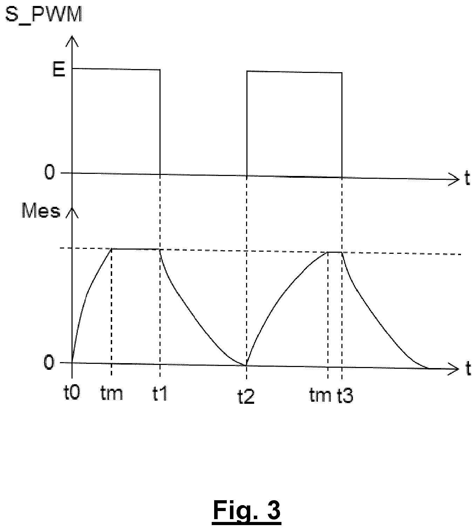

Ainsi, comme cela est illustré par la figure 3, lorsque le pied 12 du conducteur n'est pas situé à proximité de la pédale 10, le temps de montée tm est court entre les instants t0 et t1 car dans ce cas, la capacité C du condensateur est alors très faible. Lorsque le pied 12 du conducteur est situé à proximité de la pédale 10, on augmente la capacité C du condensateur, en sorte que le temps de montée tm est plus long entre les instants t2 et t3. A partir du couple tension/temps de montée, on peut en déduire la capacité C du condensateur qui est l'image de la distance entre le pied 12 du conducteur et le patin 11 de la pédale 10.

En variante ou en complément, il est possible de mesurer le ratio entre la durée du niveau haut du signal de tension du condensateur et la durée à l'état haut du signal à modulation de largeur d'impulsion S_PWM. Plus ce ratio est grand, plus le pied 12 du conducteur est loin du patin 11 de la pédale 10. Plus ce ratio est faible, plus le pied 12 du conducteur est proche du patin 11 de la pédale 10.

Selon l'invention, une entrée/sortie est utilisée pour faire les deux fonctions (application d'un signal et mesure), ce qui permet d'utiliser l'hystérèse des portes logiques du microcontrôleur pour détecter un seuil de tension. Cette mesure n'est pas très précise en valeur de tension, mais peut donner une mesure de position très précise, moyennant une calibration.

Etant donné que le corps humain n'est pas nécessairement relié à un potentiel de 0V, une calibration est nécessaire à chaque nouveau démarrage du véhicule. Cette calibration peut être totalement passive en mesurant les valeurs de tension renvoyées lors des premiers freinages en roulage basse vitesse (qui ne seront donc pas en mode autonome). Cette calibration est également nécessaire en raison du fait que l'épaisseur d'une semelle de chaussure est variable d'un modèle à l'autre.

En variante, la pédale 10 pourra être une pédale d'accélérateur ou toute autre pédale du véhicule, notamment la pédale d'embrayage.

**Revendications**

1. Pédale (10) pour véhicule automobile comportant un patin (11) sur lequel est destiné à appuyer un pied (12) d'un conducteur, ledit patin (11) comporte un capteur capacitif de détection de présence (14) du pied (12) du conducteur, le capteur capacitif (14) comporte une première plaque conductrice (15) reliée à une unité de traitement (16), un condensateur étant formé par ladite première plaque conductrice (15) et une deuxième plaque constituée par le pied (12) du conducteur, ladite pédale comportant aussi une résistance (19) de forte valeur disposée entre une unité de traitement (16) et la première plaque conductrice (15) de façon à former un circuit de type RC, la première plaque conductrice (15) du capteur capacitif (14) est excitée par un signal (S_PWM) de façon à charger et à décharger le condensateur formé par la première plaque conductrice (15) et le pied (12) du conducteur, pour obtenir un signal de tension aux bornes du condensateur dont l'allure dépend d'une constante de temps du circuit RC, l'unité de traitement (16) étant apte à traiter ce signal de tension pour en déduire une présence ou non du pied (12) du conducteur à proximité ou sur le patin (11) de la pédale (10), **caractérisée en ce qu'**une entrée/sortie de l'unité de traitement (16) est utilisée pour effectuer une double fonction d'émission du signal d'excitation (S_PWM) et de mesure (Mes) et **en ce qu'**une hystérèse de portes logiques de l'unité de traitement (16) est utilisée pour détecter un seuil de tension correspondant à la présence du pied (12) du conducteur.

2. Pédale selon la revendication 1, **caractérisée en ce que** la première plaque conductrice (15) du patin (11) de la pédale (10) est excitée par un signal à modulation de largeur d'impulsion (S_PWM).

3. Pédale selon l'une quelconque des revendications précédentes, **caractérisée en ce qu'**une calibration est effectuée à chaque nouveau démarrage du véhicule automobile.

4. Pédale selon la revendication 3, **caractérisée en ce que** la calibration est passive en mesurant des valeurs de tension renvoyées lors de premiers appuis sur la pédale (10).

5. Pédale selon l'une quelconque des revendications 1 à 4, **caractérisée en ce que** la pédale (10) est une pédale de freinage.

6. Véhicule automobile **caractérisé en ce qu'**il comporte une pédale selon l'une quelconque des revendications précédentes.

**Patentansprüche**

1. Pedal (10) für ein Kraftfahrzeug mit einem Gleitschuh (11), auf dem ein Fuß (12) eines Fahrers abgestützt ist, wobei der Gleitschuh (11) einen kapazitiven Sensor (14) zur Erfassung des Vorhandenseins des Fußes (12) des Fahrers aufweist, wobei der kapazitive Sensor (14) eine erste leitende Platte (15) aufweist, die mit einer Verarbeitungseinheit (16) verbunden ist, wobei ein Kondensator durch die erste leitende Platte (15) und eine zweite Platte durch den Fuß (12) des Fahrers gebildet ist, wobei das Pedal auch einen Widerstand (19) aufweist Zwischen einer Verarbeitungseinheit (16) und der ersten Leiterplatte (15) zur Bildung einer RC-Schaltung angeordneter hoher Wert, wobei die erste Leiterplatte (15) des kapazitiven Sensors (14) mit einem Signal (S_PWM) zum Laden und Entladen des durch die erste Leiterplatte (15) und den Fuß (12) des Leiters gebildeten Kondensators angeregt wird, um ein Spannungssignal über den Kondensator zu erhalten, dessen Verlauf von einer Zeitkonstante der RC-Schaltung abhängt, wobei die Verarbeitungseinheit (16) zur Verarbeitung dieses Spannungssignals als RC-Signal ausgebildet ist eine Anwesenheit oder Nichtvorhandensein des Fahrerfußes (12) in der Nähe oder auf dem Gleitschuh (11) des Pedals (10), **dadurch gekennzeichnet, dass** ein Eingang/Ausgang der Verarbeitungseinheit (16) verwendet wird, um eine doppelte Funktion der Emission des Anregungssignals (S_PWM) und der Messung (Mes) auszuführen, und dass eine Hysterese logischer Gatter der Verarbeitungseinheit (16) verwendet wird, um eine Spannungsschwelle zu erfassen, die der Anwesenheit des Fahrerfußes (12) entspricht.

2. Pedal nach Anspruch 1, **dadurch gekennzeichnet, dass** die erste Leiterplatte (15) des Schuhs (11) des Pedals (10) durch ein pulsbreitenmoduliertes Signal (S_PWM) erregt wird.

3. Pedal nach einem der vorhergehenden Ansprüche, **dadurch gekennzeichnet, dass** bei jedem Neuanfahren des Kraftfahrzeugs eine Kalibrierung durchgeführt wird.

4. Pedal nach Anspruch 3, **dadurch gekennzeichnet, dass** die Kalibrierung passiv erfolgt, indem Spannungswerte gemessen werden, die bei ersten Aufdrücken auf das Pedal (10) zurückgeführt werden.

5. Pedal nach einem der Ansprüche 1 bis 4, **dadurch gekennzeichnet, dass** das Pedal (10) ein Bremspedal ist.

6. Kraftfahrzeug, **dadurch gekennzeichnet, dass** es ein Pedal nach einem der vorhergehenden Ansprüche aufweist.

**Claims**

1. Pedal (10) for a motor vehicle comprising a shoe (11) on which is intended to press a foot (12) of a driver, said shoe (11) comprises a capacitive sensor (14) for detecting the presence (14) of the foot (12) of the driver, the capacitive sensor (14) comprises a first conductive plate (15) connected to a processing unit (16), a capacitor being formed by said first conductive plate (15) and a second plate constituted by the foot (12) of the driver, said pedal also comprising a resistor (19) A high-value circuit arranged between a processing unit (16) and the first conductive plate (15) to form an RC-type circuit, the first conductive plate (15) of the capacitive sensor (14) is excited by a signal (S_PWM) to charge and discharge the capacitor formed by the first conductive plate (15) and the conductor foot (12) to obtain a voltage signal across the capacitor whose path depends on a time constant of the RC circuit, the processing unit (16) being adapted to process this voltage signal to deduce therefrom presence or absence of the driver's foot (12) in the vicinity of or on the pad (11) of the pedal (10), **characterized in that** an input/output of the processing unit (16) is used to perform a dual function of transmitting the excitation signal (S_PWM) and of measuring signal (Mes) and **in that** a hysteresis of logic gates of the processing unit (16) is used to detect a voltage threshold corresponding to the presence of the driver's foot (12).

2. Pedal according to claim 1, **characterized in that** the first conductive plate (15) of the pad (11) of the pedal (10) is excited by a pulse width modulation signal (S_PWM).

3. Pedal according to any one of the preceding claims, **characterized in that** a calibration is carried out each time the motor vehicle is restarted.

4. Pedal according to claim 3, **characterized in that** the calibration is passive by measuring voltage values returned when the pedal (10) is first pressed.

5. Pedal according to one of Claims 1 to 4, **characterized in that** the pedal (10) is a brake pedal.

6. Motor vehicle **characterized in that** it comprises a pedal according to any one of the preceding claims.

**Fig. 1**

**Fig. 2**

S_PWM

**Fig. 3**

8

## RÉFÉRENCES CITÉES DANS LA DESCRIPTION

**Documents brevets cités dans la description**

- US 2011282545 A1